# EUROPEAN PATENT SPECIFICATION

(11) **EP 2 771 077 B1**
(45) Date of publication and mention of the grant of the patent: **02.08.2017**
(21) Application number: 12850738.1
(22) Date of filing: 25.10.2012
(51) Int. Cl.: A62C 3/08, B64C 1/06, B64C 1/40, E04B 1/94

(54) **HEAT SHIELDED COMPOSITE PANEL**
WÄRMEISOLIERTE VERBUNDPLATTE
PANNEAU COMPOSITE THERMIQUE

(30) Priority: 25.10.2011 US 201161551184 P; 24.10.2012 US 201213659005
(43) Date of publication of application: 03.09.2014
(73) Proprietor: B/E Aerospace, Inc., Wellington, FL 33414 (US)
(72) Inventor: LIVENGOOD, Edward, T., II, Winston-Salem, NC 27106 (US); DAVIS, Lyle, T., Winston-Salem, NC 27106 (US)
(74) Representative: Appleyard Lees IP LLP
(86) International application number: PCT/US2012/061889
(87) International publication number: WO 2013/115859

(56) References cited:
- EP-A1- 0 337 855
- DE-A1- 3 800 218
- DE-A1- 4 120 558
- DE-A1- 10 305 064
- DE-B3- 10 318 514
- US-A- 4 530 877

## Description

### TECHNICAL FIELD AND BACKGROUND OF THE INVENTION

The present invention relates generally to the field of aircraft interior materials and insulating flammable materials from high temperatures, and more particularly, to a heat shielded composite panel including an insulation barrier positioned between an underlying composite structural panel and an overlying decorative panel for insulating the decorative panel from heat transfer from the composite structural panel.

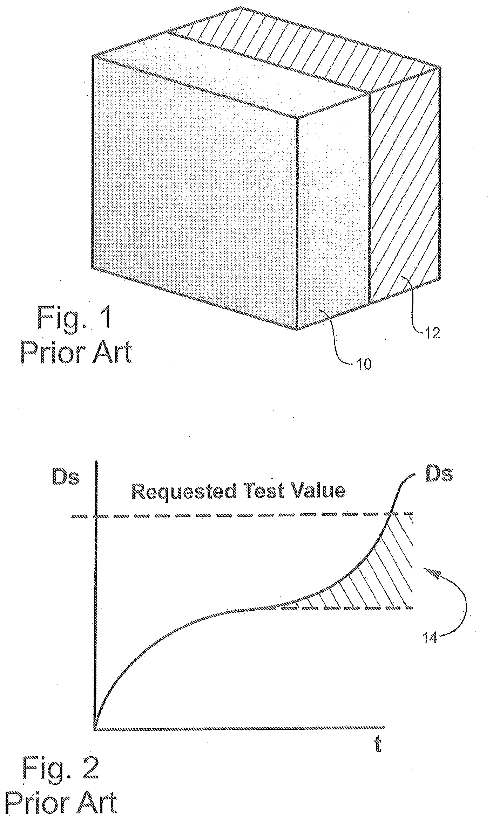

Composite panels can be used in aircraft interiors to construct interior walls, partitions and bulkheads, among other uses. Conventional panels typically include a strong, lightweight core for structural support and rigidity, and an overlying decorative covering for aesthetic purposes. Conventional panels may include additional layers depending on the end use of the panels, for example, padding for safety and acoustic liners for sound deadening. One example of a conventional composite panel is shown in FIG. 1, and includes a phenolic composite sandwich panel 10 covered with a fire retardant, but somewhat flammable, decorative panel 12 made from laminated foam and cloth.

For safety and fire prevention reasons, it is desirable for all materials used in aircraft interiors to be either constructed from fire-resistant materials or be treated with flame-retardants to decrease the flammability of these materials. With respect to seats, walls, partitions and other padded and/or upholstered surfaces, it is critical to insulate cushioning and fabric materials from radiant heat flux that can cause these materials to ignite and/or release smoke and fumes. The contribution of heat, flame and smoke density to the cabin atmosphere from additional burning materials increases the rate at which fire spreads, and decreases the time in which passengers can move to safety.

Referring to FIG. 2, smoke density levels (Dₛ) and heat release performance of the panel of FIG. 1 is illustrated graphically. During testing, over time (t), heat transfer occurs through the composite panel 10 and raises the temperature of the decorative panel 12 above its ignition temperature, resulting in unacceptable levels of heat release and smoke generation in the decorative panel, as represented by area 14.

While solutions have been developed for insulating seat cushions and upholstery from radiant heat using specific layered film arrangements and treatments, no such attempts have been made to insulate decorative panels from radiant heat from underlying structural panels. Accordingly, provided herein is a heat shielded composite panel that insulates its decorative cover from heat transfer from the underlying structural panel.
DE 41 20 558 discloses a lightweight structural panel coated with a ceramic cement coating. A decorative layer may be applied to the panel by means of a fire retarding adhesive. A layer of acrylic dispersion is applied between the ceramic cement bonding layer and decorative layer.

### BRIEF SUMMARY OF THE INVENTION

The invention is defined by the appended claims. In one aspect, an insulating solution is provided herein for decreasing the fire hazard potential of underlying materials.

In another aspect, an insulating solution is provided herein for reducing heat transfer between materials used in aircraft interior upfitting.

In another aspect, an insulating solution is provided herein for reducing heat transfer within an aircraft interior to reduce the temperature of materials.

In another aspect, an insulating solution is provided herein for reducing smoke and fume release in an aircraft cabin.

To achieve the foregoing and other aspects and advantages of the present invention, provided herein is a heat shielded composite panel including a first part including a composite structural panel coated with a ceramic cement coating, and a second part including a foam panel having a flame-retardant coating applied to the surface of the foam panel, wherein the second part overlies the first part such that the ceramic cement coating and the flame-retardant coating face one another and are in contact.

The composite structural panel can be a phenolic composite sandwich panel.

The fire-safe coating can be a polymer coating, such as a polymer coating incorporating one or more of fire-resistant additives and fillers.

The polymer coating can penetrate the surface of the foam panel.

The foam panel can be a decorative foam panel, such as a foam panel covered with fabric.

The ceramic cement coating can include one or more of aluminum silicates and alumina-silica based cements.

The ceramic cement coating can form a hard coating on the surface of the composite structural panel.

The composite panel can be incorporated into one or more of an aircraft interior wall, partition or bulkhead.

Also disclosed herein is an aircraft interior composite panel including a first part including a structural panel coated with a ceramic cement coating, and a second part including a foam panel having a polymer coating penetrating the surface of the foam panel, wherein the second part overlies the first part such that the ceramic cement coating and the polymer coating face one another and are in contact.

Additional features and advantages of the invention will be set forth in the detailed description which follows, and in part will be readily apparent to those skilled in the art from that description or recognized by practicing the invention as described herein. It is to be understood that both the foregoing general description and the following detailed description present various embodiments of the invention, and are intended to provide an overview or framework for understanding the nature and character of the invention as it is claimed. The accompanying drawings are included to provide a further understanding of the invention, and are incorporated in and constitute a part of this specification.

### BRIEF DESCRIPTION OF THE DRAWINGS

These and other features, aspects and advantages of the present invention are better understood when the following detailed description of the invention is read with reference to the accompanying drawings, in which:
FIG. 1 is an exaggerated enlarged fragmentary view of a portion of a prior art composite panel;
FIG. 2 is a graph illustrating the smoke density effect in the composite panel construction of FIG. 1;
FIG. 3 is an exaggerated enlarged fragmentary view of a portion of the heat shielded composite panel according to an embodiment of the invention; and
FIG. 4 is a graph illustrating the smoke density effect in the heat shielded composite panel construction of FIG. 3.

### DETAILED DESCRIPTION OF THE INVENTION

The present invention will now be described more fully hereinafter with reference to the accompanying drawings in which exemplary embodiments of the invention are shown. However, the invention may be embodied in many different forms and should not be construed as limited to the representative embodiments set forth herein. The exemplary embodiments are provided so that this disclosure will be both thorough and complete, and will fully convey the scope of the invention and enable one of ordinary skill in the art to make, use and practice the invention. Like reference numbers refer to like elements throughout the various drawings.

Referring to the figures, a heat shielded composite panel is shown for use in the construction of aircraft interior walls, partitions and bulkheads, among other uses. The heat shielded composite panel provides the structural advantages of conventional sandwich panel construction along with an additional benefit of shielding the overlying, somewhat flammable, decorative foam panel from high temperatures potentially transferred from the sandwich panel to the foam panel during a fire.

The term "decorative foam panel" as used herein refers to the foam panel portion with fire-safe coating, however, can include additional components such as padding, cloth, fabric, upholstery, acoustic insulation layers, other fire blocking layers and combinations thereof. Decorative foam panels can be used for aesthetic reasons to hide the underlying structural panel, and are often padded for safety and covered with a decorative fabric that matches the interior cabin. All or portions of a structural panel can be constructed according to the heat shielding construction as defined herein. Portions of the structural panels can be provided without the decorative foam panel to accommodate fasteners, attachment points and intersections with other structures or similarly constructed panels.

The term "composite structural panel" as used herein, also referred to as a "sandwich panel", can include a core panel sandwiched between a plurality of structural plies. The core panel can comprise a substantial portion of the thickness of the structural panel and can be an aramid core panel, honeycomb panel or like panel that is preferably lightweight and fire retardant. Structural plies, or structural layers, can be arranged above and below the core panel parallel to the core panel and running coextensive therewith. Structural plies can include any number of plies above and below the core panel, and can be oriented at varying orientations to optimize the distribution of load through the panel field area. Structural plies can have varying orientations and directional weaves, for example 0°, 45° and 90°. Structural plies above and below the core panel can be sandwiched between doubler plies oriented at varying orientations. Doubler plies can include plys having fibers dispersed within a resin body.

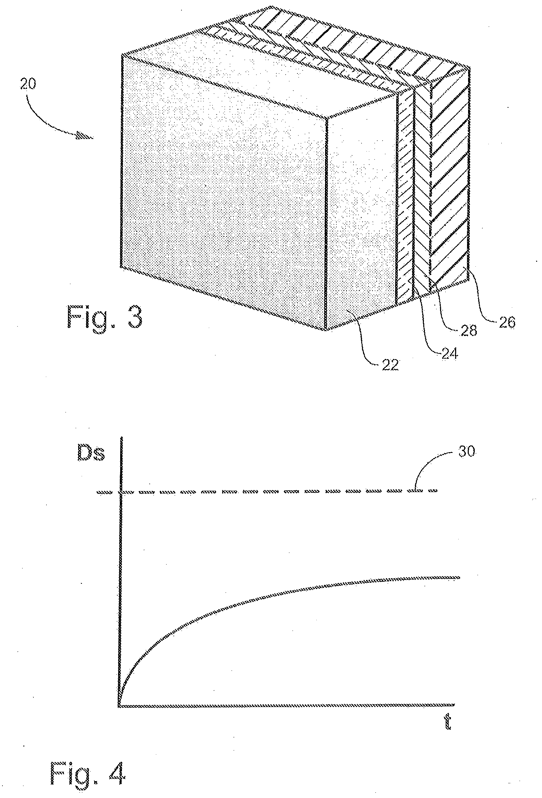

Referring to FIG. 3, a portion of the heat shielded composite panel of the present invention is shown generally at reference numeral 20. The heat shielded composite panel 20 has a two-part construction generally including a first part including a phenolic composite structural panel 22 coated with a ceramic cement coating 24, and a second part including a decorative foam panel 26 having a polymer coating 28 penetrating the surface of the foam panel 26. As assembled, the second part overlies the first part such that the ceramic cement coating 24 and the polymer coating 28 face one another and are in contact.

The ceramic cement coating 24 and the polymer coating 28 separate and provide an insulation barrier between the composite structural panel 22 and the foam panel 26, thus insulating the foam panel 26 from heat from the composite structural panel 22. The polymer coating 28 applied to the surface and/or penetrating the surface of the foam panel 26 functions to slow the ignition of the foam panel 26.

Suitable examples of ceramic cement for use in the present invention include, but are not limited to, aluminum silicates and alumina-silica based cements having a high temperature resistance and capable of creating hard coatings on substrates. Suitable examples of fire-safe polymers include, but are not limited to, polymers intrinsically resistant to decomposition from heat, and polymers incorporating fire-resistant additives and fillers.

The smoke density affect in the heat shielded composite panel 20 is graphically illustrated in FIG. 4. Federal Air regulation 25.853(d) details testing requirements for determining the acceptability of materials utilized in aircraft interiors. Regulation 25.853(d) includes two separate tests: (1) the OSU Rate of Heat Release Test, and; (2) the Smoke Density Test. The OSU Rate of Heat Release Test involves exposing aircraft interior cabin materials to incident radiation heat flux, and measuring the rate at which a burning item releases heat. The OSU test can be used to determine at what temperature certain interior materials will ignite, thus starting a fire or contributing to the spreading of an existing fire. The second test, the Smoke Density Test, is used to measure and observe the relative amounts or density of smoke produced when a material is burned. This test is also useful in determining the smoke contribution of a burning material to the aircraft cabin atmosphere and the decrease in visibility that occupants will encounter in exiting the passenger compartment during a fire.

Under testing, the smoke density levels (Dₛ) produced by heating the panel 20 remained below an acceptable level 30 over time (t), thus showing that heat transfer from the composite structural panel 22 to the decorative foam panel 26 was reduced as a result of the panel construction described herein. Comparing FIGS. 2 and 4 and the performance of the heat shielded composite panel 20 of the present invention with the performance of the prior art composite panel 10, it is clear that the heat shielded composite panel 20 substantially outperformed the prior art composite panel 10 in the smoke density test.

By covering the underlying composite structural panel 22 with the foam panel 26 having the polymer coating 28, it may be possible to relax the non-flammability requirements of the underlying sandwich panel 22, as the combined contribution of heat and smoke to the cabin interior during a fire is reduced.

The decorative foam panel 26 can include a fabric covering that may be treated with a flame-retardant or constructed with flame-retardant additives to prevent burning, smoke and fume release. The decorative foam panel 26 can additionally include an aluminum film or ceramic fabric layer, a fire-blocking layer and an adhesive layer. A suitable example of aluminum film includes, but is not limited to, about 0.025 mm aluminum film or sheet. Suitable examples of ceramic fabrics can include, but are not limited to, ceramic textiles, ceramic fibre yarns, ceramic fiber yarns reinforced with wire or glass filament, woven ceramic fabrics and the like that serve as a thermal barrier. Ceramic textiles offer high temperature protection and are lightweight and durable. Further, aluminum film and ceramic fabric are flexible. Suitable examples of fire-blocking materials can include, but are not limited to, fire retardant materials, silicone foams of varying thickness, silicone applied to fiberglass, fire-blocking gels and the like for resisting burnthrough and reducing the spread of flames to other areas. Suitable examples of adhesives can include, but are not limited to, pressure-sensitive adhesives, Fastbond'™, Aquabind™ and like adhesives. Adhesives if used herein can function to prevent the movement of one component with respect to another, and can also be used to prevent the movement of the decorative foam panel 26 relative to the composite sandwich panel 22. Aluminum film, ceramic fabric, fire-blocking and adhesive materials used herein are preferably chosen to emit no or extremely low levels of smoke or toxic gas when subjected to heat or flame. Fire-blocking materials utilized herein preferably meet U.S. Federal Government regulations for the aviation sector.

The overlying decorative foam panel 26 can be shaped to conform to the shape of the underlying composite structural panel 22. The built thickness may be increased/decreased based on the flammability and location of the materials being insulated. The foam panel thickness may be dependent upon the type, surface area, thickness and position within the environment. For example, heat shielded composite panels can have varying thicknesses based on the thickness of the decorative foam panel 26, proximity to passengers, potential heat that the decorative foam panel 26 may be subjected to, and the need for controlling the amount of smoke in the aircraft cabin. A non-passenger carrying portion of the aircraft or partition may require a lesser amount of insulating materials due to the distance from passengers.

While specific embodiments of heat shielded composite panels have been described above with reference to aircraft interior structures, it is envisioned that the invention and components thereof can be used to insulate other flammable materials found elsewhere, such as other vehicles and floor coverings, wall coverings, insulation,
cargo compartment liners, air ducts, trim strips, molded parts, etc.

## Claims

1. A heat shielded composite panel (20), comprising:
a first part including a composite structural panel (22) coated with a ceramic cement coating; and
a second part including a foam panel (26) having a flame-retardant coating (28) applied to a surface of the foam panel (26);
wherein the second part overlies the first part such that the ceramic cement coating and the fire-safe coating (28) face one another and are in contact.

2. The composite panel (20) according to claim 1, wherein the composite structural panel (22) is a phenolic composite sandwich panel.

3. The composite panel (20) according to claim 1, wherein the flame-retardant coating (28) is a polymer coating.

4. The composite panel (20) according to claim 3, wherein the polymer coating penetrates the surface of the foam panel (26).

5. The composite panel (20) according to claim 3, wherein the polymer coating incorporates one or more of fire-resistant additives and fillers.

6. The composite panel (20) according to claim 1, wherein the foam panel (26) includes additional components and combinations of: padding, cloth, fabric, upholstery, acoustic insulation layers, and other fire blocking layers .

7. The composite panel (20) according to claim 1, wherein the foam panel (26) is covered with fabric.

8. The composite panel (20) according to claim 1, wherein the ceramic cement coating includes one or more of aluminum silicates and alumina-silica based cements.

9. The composite panel (20) according to claim 1, wherein the ceramic cement coating forms a hard coating on the surface of the composite structural panel (22).

10. The composite panel (20) according to claim 1, wherein the composite panel (20) is incorporated into one or more of an interior wall, partition and bulkhead within an aircraft interior.

11. A heat shielded composite panel (20) according to any preceding claim, for use as an aircraft interior composite panel (20).

## Patentansprüche

1. Wärmeisolierte Verbundplatte (20), aufweisend:
ein erstes Teil, das eine Verbundstrukturplatte (22) enthält, die mit einer Keramikzementbeschichtung beschichtet ist; und
ein zweites Teil, das eine Schaumplatte (26) mit einer flammenhemmenden Beschichtung (28) enthält, die auf eine Oberfläche der Schaumplatte (26) aufgebracht ist;
wobei das zweite Teil das erste Teil derart überlagert, dass die Keramikzementbeschichtung und die flammenhemmende Beschichtung (28) einander zugekehrt und in Berührung miteinander sind.

2. Verbundplatte (20) nach Anspruch 1, wobei die Verbundstrukturplatte (22) eine Phenolverbund-Sandwichplatte ist.

3. Verbundplatte (20) nach Anspruch 1, wobei die flammenhemmende Beschichtung (28) eine Polymerbeschichtung ist.

4. Verbundplatte (20) nach Anspruch 3, wobei die Polymerbeschichtung die Oberfläche der Schaumplatte (26) durchdringt.

5. Verbundplatte (20) nach Anspruch 3, wobei die Polymerbeschichtung einen oder mehr feuerbeständige Zusätze und Füllstoffe eingliedert.

6. Verbundplatte (20) nach Anspruch 1, wobei die Schaumplatte (26) zusätzliche Komponenten und Kombinationen aus Folgendem enthält: Abpolsterung, Tuch, Stoff, Polsterung, Schallisolationsschichten und andere feuerblockierende Schichten.

7. Verbundplatte (20) nach Anspruch 1, wobei die Schaumplatte (26) mit Stoff abgedeckt ist.

8. Verbundplatte (20) nach Anspruch 1, wobei die Keramikzementbeschichtung eines oder mehr von Aluminiumsilikaten und aluminiumsilikatbasierten Zementen enthält.

9. Verbundplatte (20) nach Anspruch 1, wobei die Keramikzementbeschichtung eine harte Beschichtung auf der Oberfläche der Verbundstrukturplatte (22) ausbildet.

10. Verbundplatte (20) nach Anspruch 1, wobei die Verbundplatte (20) in eine oder mehr einer Innenwand, Abteilung oder Trennwand eingegliedert ist.

11. Wärmeisolierte Verbundplatte (20) nach einem der vorhergehenden Ansprüche zum Gebrauch als Flugzeuginnenraumverbundplatte (20).

## Revendications

1. Panneau composite à écran thermique (20), comprenant :
une première partie comprenant un panneau structural composite (22) revêtu d'un revêtement de ciment céramique ; et
une deuxième partie comprenant un panneau de mousse (26) comportant un revêtement ignifuge (28) appliqué sur une surface du panneau de mousse (26) ;
dans lequel la deuxième partie recouvre la première partie de telle sorte que le revêtement de ciment céramique et le revêtement anti-incendie (28) se trouvent face à face et soient en contact.

2. Panneau composite (20) selon la revendication 1, dans lequel le panneau structural composite (22) est un panneau composite phénolique « en sandwich ».

3. Panneau composite (20) selon la revendication 1, dans lequel le revêtement ignifuge (28) est un revêtement polymère.

4. Panneau composite (20) selon la revendication 3, dans lequel le revêtement polymère pénètre dans la surface du panneau de mousse (26).

5. Panneau composite (20) selon la revendication 3, dans lequel le revêtement polymère comprend un ou plusieurs additifs et charges résistants au feu.

6. Panneau composite (20) selon la revendication 1, dans lequel le panneau de mousse (26) contient les constituants et combinaisons supplémentaires suivants : matelassage, étoffe, tissu, tapisserie d'ameublement, couches d'isolation acoustique, et autres couches pare-feu.

7. Panneau composite (20) selon la revendication 1, dans lequel le panneau de mousse (26) est recouvert de tissu.

8. Panneau composite (20) selon la revendication 1, dans lequel le revêtement de ciment céramique contient un ou plusieurs ciments à base de silicates d'aluminium et d'alumine-silice.

9. Panneau composite (20) selon la revendication 1, dans lequel le revêtement de ciment céramique forme un revêtement dur sur la surface du panneau structural composite (22).

10. Panneau composite (20) selon la revendication 1, le panneau composite (20) étant incorporé dans une ou plusieurs d'une paroi intérieure, d'une séparation et d'une cloison dans l'intérieur d'un avion.

11. Panneau composite à écran thermique (20) selon l'une quelconque des revendications précédentes, destiné à une utilisation comme panneau composite dans l'intérieur d'un avion (20).
